# EUROPÄISCHE PATENTSCHRIFT

(11) **EP 2 149 449 B1**
(45) Veröffentlichungstag und Bekanntmachung des Hinweises auf die Patenterteilung: **19.10.2011**
(21) Anmeldenummer: 09165388.1
(22) Anmeldetag: 14.07.2009
(51) Int. Cl.: B29C 65/44, B29C 65/18, B01D 46/10, F24F 13/28

(54) **Verfahren und Vorrichtung zur Herstellung eines Verbundbauteils mit einem schmelz- oder erweichbaren Trägerteil und einem Anbauteil, insbesondere KFZ-Lufteinlasssieb**
Method and device to manufacture a composite component with a melting or softening carrier element and an attachment, in particular vehicle air inlet sieve
Procédé et dispositif de fabrication d'un composant composite doté d'un élément de support pouvant fondre ou se ramollir et d'une pièce rapportée, notamment un filtre d'entrée d'air de véhicule automobile

(30) Priorität: 01.08.2008 DE 102008035991
(43) Veröffentlichungstag der Anmeldung: 03.02.2010
(73) Patentinhaber: Röchling Automotive AG & Co. KG, 68165 Mannheim (DE)
(72) Erfinder: Marcomin, Maurizio, 39055 Laives (BZ) (IT)
(74) Vertreter: Trossin, Hans-Jürgen

(56) Entgegenhaltungen:
- WO-A-98/42988
- WO-A-03/046390
- GB-A- 762 906

## Beschreibung

Die vorliegende Erfindung betrifft ein Verfahren mit den Merkmalen des Oberbegriffs von Anspruch 1 zur Herstellung eines Verbundbauteils mit einem in wenigstens einer Richtung gasdurchlässigen Trägerteil, das zumindest abschnittsweise aus einem bei einer Trägerteil-Grenztemperatur schmelzbarem oder zumindest thermisch erweichbarem Werkstoff gebildet ist, und einem mit dem Trägerteil verbundenen, in wenigstens einer Richtung gasdurchlässigen Anbauteil aus einem Werkstoff, welcher bei einer höheren Temperatur als der Trägerteil-Grenztemperatur schmelzbar oder zumindest thermisch erweichbar ist. Überdies betrifft die vorliegende Erfindung eine Vorrichtung mit den Merkmalen des Oberbegriffs von Anspruch 7 zur Herstellung eines solchen Verbundbauteils.

Derartige Verbundbauteile werden beispielsweise in Kraftfahrzeugen, dort etwa in Lufteinlasskanälen verwendet, um eine Luftströmung in den Lufteinlasskanälen grob von Partikeln zu reinigen. Derartige Partikel können beispielsweise Laub und Laubteile, Blütenblätter und dergleichen, aber auch kleine Eisbröckchen sein, wie sie im Winter häufig in die Lufteinlässe zwischen dem unteren Windschutzscheibenrand und der Motorhaube gelangen können. Derartige Lufteinlässe sind häufig aus thermoplastischen Kunststoff durch Spritzgießen gefertigt, was den Vorteil einer großen Formgestaltungsfreiheit aufweist.

Allerdings sind mit Spritzgussbauteilen Grobreinigungssiebe nur bis zu einer gewissen Maschenweite mit ausreichender Qualität reproduzierbar herstellbar, welche gerade für ein Aussondern von Eisklümpchen, wie sie etwa in Firn auftreten, nicht ausreicht.

Aus diesem Grunde sind Grobreinigungssiebe für Luftströmungen häufig als Verbundbauteil ausgestaltet, bei welchem das Trägerteil spritzgegossen ist, um so den Vorteil einer hohen Formgestaltungsfreiheit zu erhalten, und bei welchem ein Anbauteil aus einem anderen Werkstoff, in der Regel Metall, gebildet ist, welcher die Realisierung von ausreichend kleinen Maschenweiten bei gleichzeitiger Standfestigkeit im Hinblick auf die auftretenden Belastungen ermöglicht.

So ist es im Stand der Technik beispielsweise bekannt, Anbauteil und Trägerteil miteinander zu verklipsen oder zu verklemmen. Dies ist jedoch, abhängig von der gewählten Bauteilgeometrie, nicht in allen Fällen möglich oder zumindest nicht ohne Qualitätseinbuße möglich.

Die Druckschrift WO 03/046390 A2 beschreibt ein Verfahren zum Befestigen eines als Montageelement verwendbaren Einsatzes an einem Bauteil aus einem Leichtbau-Werkstoff, wobei das Bauteil mit einer Aussparung versehen und ein Verbindungselement aus thermoplastischem Material in die Aussparung eingebracht wird. Der Einsatz wird dann zumindest teilweise in die Aussparung eingeführt und das Bauteil und der Einsatz werden miteinander verbunden, indem durch Anwendung von Ultraschallenergie das Verbindungselement aus thermoplastischem Material plastifiziert und der Einsatz mit Hilfe des plastifizierten Verbindungselements stoff- und/oder formschlüssig mit der die Aussparung begrenzenden Umfangswand des Bauteils verbunden wird.

Aus der Druckschrift WO 98/42988 A ist ein Verfahren zur Verankerung eines Verbindungselementes in einem Bauteil aus einem porösen Material bekannt. Dabei wird das Verbindungselement in ein in dem Bauteil angebrachtes Sackloch zunächst ohne größeren Kraftaufwand in eine erste Position hineingedrückt und dann durch eine gewisse Presskraft in eine zweite Position bewegt. Dabei wird dem Verbindungselement beispielsweise durch Ultraschall gezielt Energie zugeführt wird, so dass es an vorbestimmten Verankerungsstellen plastifiziert wird. Das plastifizierte Material des Verbindungselements wird in das poröse Material des Bauteils hineingedrückt und bildet dort örtliche makroskopische Verankerungen.

Dokument GB 762 906 A beschreibt ein Verfahren mit den Merkmalen des Oberbegriffs von Anspruch 1 sowie eine Vorrichtung mit den Merkmalen des Oberbegriffs von Anspruch 7.

Es ist daher Aufgabe der vorliegenden Erfindung, eine technische Lehre zur Herstellung der eingangs genannten Verbundbauteile anzugeben, auf deren Grundlage Verbundbauteile der eingangs genannten Artinkurzer Zeil herstellbar sind.

Diese Aufgabe wird gemäß einem ersten Gesichtspunkt der vorliegenden Erfindung gelöst durch ein Verfahren zur Herstellung eines Verbundbauteils mit den Merkmalen von Anspruch 1.

Indem das Anbauteil auf eine Temperatur erwärmt wird, die über der Trägerteil-Grenztemperatur liegt, ist das aufgrund seines Werkstoffes bei dieser Temperatur immer noch formbeständige Anbauteil in dem Andrückschritt in das Trägerteil eindrückbar, so dass zwischen Anbauteil und Trägerteil lokal eine Formschlussverbindung hergestellt werden kann.

Die Gasdurchlässigkeit sowohl des Anbauteils wie auch des Trägerteils ermöglicht dabei ein vorteilhaftes konvektives Kühlen der beiden Teile nach deren Fügen zu dem Verbundbauteil durch eine das Anbauteil und das Trägerteil wenigstens teilweise durchströmende Gasströmung. Damit kann zumindest die Zykluszeit zur Herstellung des Verbundbauteils verkürzt werden. Je nach Verfahrensführung weist die konvektive Kühlung durch Durchströmen des Anbauteils und des Trägerteils mit Gas noch weitere Vorteile auf, welche weiter unten eingegangen werden wird.

Die Gasdurchlässigkeit des Trägerteils kann dabei in völlig beliebiger Weise erreicht werden. Beispielsweise kann das Trägerteil lediglich als eine große Öffnung umschließendes Rahmenteil ausgebildet sein, so dass die Gasdurchlässigkeit durch die große Öffnung erreicht wird. Ebenso kann das Trägerteil dann, wenn eine mehrfache Abstützung des Anbauteils gewünscht ist, auch gitterartig ausgestaltet sein. Die Wahl der Maschenweite eines solchen gitterartigen Trägerteils obliegt dem Fachmann aufgrund der an das Verbundbauteil gestellten technischen Anforderungen unter Berücksichtigung des zur Herstellung des Trägerteils verwendeten Werkstoffs.

Die oben genannten Verfahrensschritte können sich zeitlich ganz oder teilweise überlappen. So kann beispielsweise das Andrücken von Anbauteil und Trägerteil aneinander ganz oder teilweise gleichzeitig mit dem Erwärmen des Anbauteils auf eine Temperatur über die Trägerteil-Grenztemperatur erfolgen. Ebenso können sich zur Erzielung möglichst kurzer Zykluszeiten die Verfahrensschritte des Andrückens von Anbauteil und Trägerteil und des konvektiven Kühlens von Anbauteil und Trägerteil zeitlich überlappen. Selbstverständlich besteht auch die Möglichkeit, die genannten Verfahrensschritte zeitlich aufeinander folgend durchzuführen, also mit einem nachfolgenden Verfahrensschritt erst zu beginnen, wenn der vorhergehende Verfahrensschritt beendet ist.

Vorzugsweise ist das Trägerteil aus thermoplastischem Kunststoff gebildet, um ihn spritzgusstechnisch herstellen zu können. Dies ist jedoch nicht zwingend so. Grundsätzlich kann jeder thermisch schmelzbare oder zumindest erweichbare Werkstoff zur Ausbildung des Trägerteils verwendet werden.

Es soll auch nicht ausgeschlossen sein, dass das Trägerteil nicht ausschließlich aus einem thermisch schmelzbaren oder erweichbaren Werkstoff hergestellt ist. Vielmehr soll es zur Erreichung der erfindungsgemäßen Vorteile ausreichen, wenn zumindest Abschnitte des Trägerteils aus einem derartigen Werkstoff hergestellt sind. Diese Abschnitte sollten dann jedoch zumindest zum Teil an einer Außenseite des Trägerteils gelegen sein, welche durch das Anbauteil kontaktierbar ist.

Ebenso ist für das Anbauteil jeder beliebige Werkstoff denkbar, solange er nur eine höhere Schmelz- oder Erweichungstemperatur als der thermisch schmelz- oder erweichbare Werkstoff des Trägerteils aufweist. Dabei sind selbstverständlich gleichartige Temperaturen miteinander vergleichbar, also die Erweichungstemperatur, sofern vorhanden, des Anbauteil-Werkstoffs mit der Erweichungstemperatur, sofern vorhanden, des Trägerteil-Werkstoffs, oder die Schmelztemperatur, sofern vorhanden, des Anbauteil-Werkstoffs mit der Schmelztemperatur, sofern vorhanden, des Trägerteil-Werkstoffs.

Weiterhin soll nicht ausgeschlossen, dass auch das Anbauteil neben dem oben genannten Werkstoff mit einer verglichen mit der Trägerteil-Grenztemperatur höheren Schmelz- bzw. Erweichungstemperatur weitere Werkstoffe umfasst, sofern diese das hier beschriebene erfindungsgemäße Herstellungsverfahren nicht derartig nachteilig beeinflussen, dass der erfindungsgemäß erzielbare Erfolg nicht mehr erreichbar ist.

Vorzugsweise wird für den Anbauteil-Werkstoff mit den oben bezeichneten thermischen Eigenschaften relativ zum Trägerteil-Werkstoff ein Werkstoff mit guten Wärmeleitungseigenschaften gewählt, wie sie grundsätzlich Metalle aufweisen. Dies erleichtert ein möglichst großflächiges Erwärmen des Anbauteils auf eine Temperatur über die Trägerteil-Grenztemperatur.

Das Verfahren kann dann auf sehr engem Raum mit hoher Prozesssicherheit ausgeführt werden, wenn eine Wärmezufuhr in das Anbauteil von einer Seite des Anbauteils ausgehend erfolgt, welche nach Fertigstellung des Verbundbauteils vom Trägerteil weg weist.

Aus den gleichen Gründen ist es bevorzugt, wenn das Trägerteil zur Durchführung des konvektiven Kühlens durch die Gasströmung von einer Seite angeströmt wird, welche nach Fertigstellung des Verbundbauteils vom Anbauteil weg weist.

In diesem Falle kann also eine thermische Einwirkung auf die beteiligten Teile (Erwärmung des Anbauteils, konvektive Kühlung sowohl von Anbauteil als auch von Trägerteil) erreicht werden, ohne dass sich hierzu Fügevorrichtungsteile zwischen Anbauteil und Trägerteil befinden müssen, was das Fügen von Anbauteil und Trägerteil aneinander erheblich erleichtert und die hierfür benötigte Zeit verkürzt, so dass die Zykluszeit zur Herstellung des gewünschten Verbundbauteils vorteilhaft kurz gehalten werden kann.

Dann, wenn sich die Wärmequelle zur Erwärmung des Anbauteils auch während der Andrückphase des Andrückens von Anbauteil und Trägerteil aneinander sehr nahe an dem Anbauteil oder sogar in Kontakt mit diesem befindet, kann es durch das Schmelzen oder wenigstens Erweichen des Trägerteil-Werkstoffs während der Andrückphase unter Umständen zu einem Benetzen der Wärmequelle mit Trägerteil-Werkstoff kommen. Auch für diesen Fall ist die oben beschriebene konvektive Kühlung mittels eines das Trägerteil und das Anbauteil zumindest teilweise, vorzugsweise vollständig durchströmenden Gasströmung vorteilhaft, wenn diese auch die Wärmequelle erreicht und diese vorübergehend kühlt. Hierdurch kann eine unerwünschte Verschmutzung der Wärmequelle durch Trägerteil-Werkstoff ausgeschlossen oder zumindest deren Risiko verringert werden.

Durch das Erwärmen des Anbauteils auf eine Temperatur über die Trägerteil-Grenztemperatur sind die Voraussetzungen für einen einfachen, schnellen und sicheren Formschluss zwischen Anbauteil und Trägerteil geschaffen. Dieser Formschluss kann insbesondere dann erreicht werden, wenn das Verfahren so geführt wird, dass während des Andrückens von Anbauteil und Trägerteil aneinander ein Umfließen von Abschnitten des Anbauteils durch Werkstoff des Trägerteils erfolgt.

Eine vorteilhafte geringe Anzahl von Werkzeugteilen zur Herstellung des Verbundbauteils kann dadurch erreicht werden, dass das Erwärmen des Anbauteils zumindest auch konduktiv durch Wärmeübergang von einer Heizeinrichtung auf das Anbauteil erfolgt, wobei die Heizeinrichtung zumindest einen Teil, vorzugsweise einen überwiegenden Teil des Anpressdrucks, besonders bevorzugt den gesamten Anpressdruck für das Andrücken von Anbauteil und Trägerteil aneinander erzeugt. Dann kann also die Heizeinrichtung nicht nur zum Erwärmen des Anbauteils, sondern auch zum Andrücken von Anbauteil und Trägerteil aneinander verwendet werden.

Die oben genannte Aufgabe der vorliegenden Erfindung wird ebenso gelöst durch eine Vorrichtung mit den Merkmalen von Anspruch 7.

Die hier und im Folgenden beschriebene Vorrichtung, die insbesondere zur Durchführung des zuvor beschriebenen Verfahrens dient, weist somit Vorteile auf, welche bereits aus der obigen Verfahrensbeschreibung hervorgehen.

Mit der Heizeinrichtung und der wenigstens einen Gasdüse, vorzugsweise jedoch einer Gasdüsenanordnung, mit der gegebenen Ausrichtung können die oben genannten Vorteile bis hin zur vorübergehenden Kühlung der Heizeinrichtung durch eine von der wenigstens einen Gasdüse ausgehenden Gasströmung erreicht werden.

Im Betrieb der hier beschriebenen Vorrichtung können also vorteilhaft Anbauteil und Trägerteil zwischen Heizeinrichtung und Gasdüse, in der Regel ohne Zwischenanordnung von Vorrichtungsteilen oder Werkzeugen, eingebracht und in verhältnismäßig kurzer Zeit miteinander verbunden werden.

Zur oben genannten Ausübung von Druck durch die Heizeinrichtung auf das Anbauteil und mittelbar dadurch auch auf das Trägerteil ist es vorteilhaft, wenn die Heizeinrichtung zur Gasdüse hin und von dieser weg beweglich angeordnet ist.

Grundsätzlich ist es denkbar, dass zur Ausübung des oben genannten Drucks die Gewichtskraft der Heizeinrichtung oder eines ihrer Abschnitte ausgenutzt wird. Zur Erzielung möglichst kurzer Zykluszeiten oder/und einer besonders hohen Fügesicherheit ist es jedoch vorteilhaft, wenn sie ein Kraftgerät umfasst, welches mit der Heizeinrichtung derart gekoppelt oder koppelbar ist, dass zumindest ein Abschnitt der Heizeinrichtung mit einer zu der Gasdüse hin wirkenden Kraft beaufschlagbar ist.

Aus den Gründen einer möglichst guten Wärmeleitung bei gleichzeitiger Beständigkeit gegen Umwelteinflüsse ist es vorteilhaft, wenn das Anbauteil ein Metallgitter, insbesondere ein Metallgeflecht umfasst. Zusätzlich oder alternativ kann je nach gewünschter Maschenweite das Anbauteil auch ein Metallfasergewirr umfassen.

Um das Trägerteil möglichst einfach und prozessicher spritzgusstechnisch herstellen zu können, ist es vorteilhafter zumindest abschnittsweise, vorzugsweise vollständig, aus thermoplastischem Kunststoff gebildet.

Zur Befestigung des Anbauteils an dem Trägerteil an wohldefinierten vorbestimmten Verbindungsstellen kann an dem Trägerteil in dessen Ausgangszustand wenigstens ein Materialvorsprung vorgesehen sein, welcher zur Verformung während des Fügens von Anbauteil und Trägerteil ausgebildet ist.

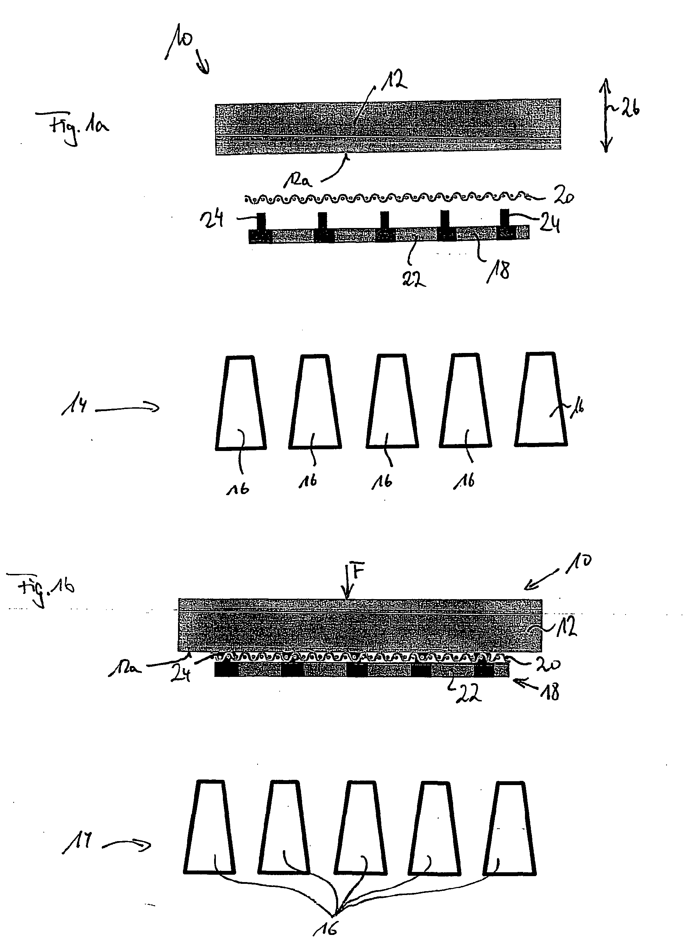

Die vorliegende Erfindung wird nachfolgend anhand der beiliegenden Figur 1a bis 1d näher beschrieben werden. Es stellt dar:
- Fig. 1a:: eine Fügevorbereitungsanordnung von Heizeinrichtung, Anbauteil, Trägerteil und Düsenanordnung,
- Fig. 1b:: einen Zustand mit erwärmten Anbauteil und zumindest teilweise aufgeschmolzenem verformten Trägerteil,

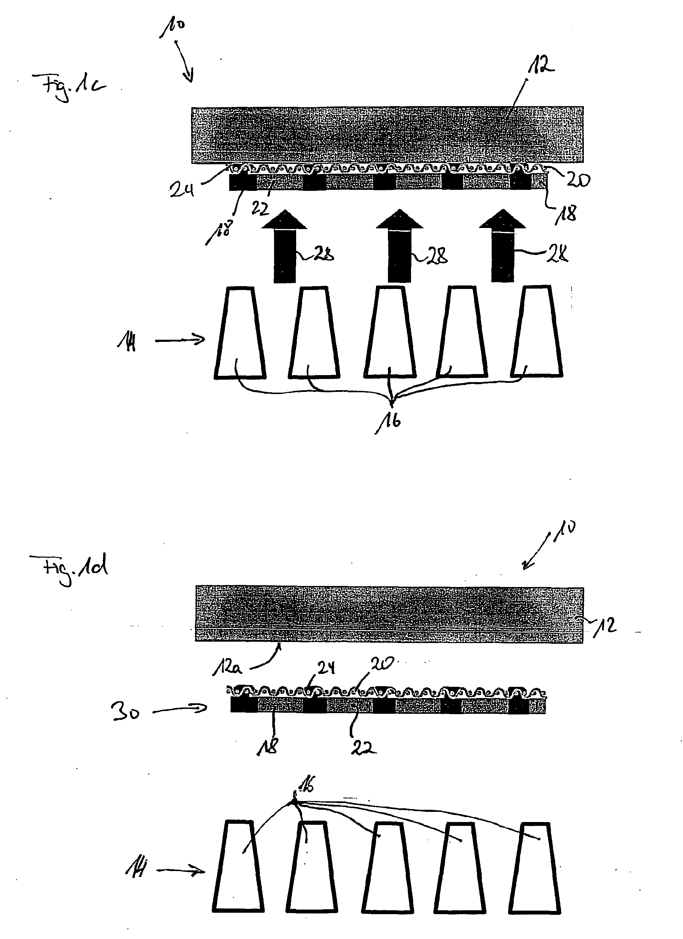

- Fig. 1c:: eine konvektive Kühlung von Trägerteil, Anbauteil und Heizeinrichtung, und
- Fig. 1 d:: das fertige Verbundbauteil mit der davon abgehobenen Heizeinrichtung.

In der beiliegenden Figur 1 ist eine erfindungsgemäße Ausführungsform eines Verfahrens und einer Vorrichtung zur Herstellung eines zuvor geschilderten Verbundbauteils schematisch dargestellt.

In Figur 1 ist eine Vorrichtung zur Herstellung des Verbundbauteils allgemein mit 10 bezeichnet. Diese Vorrichtung 10 umfasst eine Heizeinrichtung 12 in Form eines sogenannten "Heizspiegels" mit einer Heizfläche 12a, welcher dazu ausgebildet ist, überwiegend durch Wärmeleitung ein Bauteil aufgrund von Kontakt mit diesem zu erwärmen.

Weiterhin umfasst die Vorrichtung 10 eine Gasdüsenanordnung 14 mit einer Mehrzahl von Gasdüsen 16, welche derart ausgerichtet sind, dass sie Gas in Richtung zum Heizspiegel 12, genauer zur Heizfläche 12a hin ausstoßen.

In dem Raum zwischen dem Heizspiegel 12 und der Gasdüsenanordnung 14 ist ein Trägerteil 18 aus thermoplastischem Kunststoff sowie ein Metalldrahtgeflecht 20 als das Anbauteil in einer Fügevorbereitungsstellung angeordnet.

Das Trägerteil 18 aus thermoplastischem Kunststoff ist durch Spritzguss hergestellt und weist eine grobgitterartige Struktur auf. Sowohl das Trägerteil 18 als auch das Metalldrahtgeflecht 20 sind im Wesentlichen flächige Bauteile, welche sich im Wesentlichen orthogonal zur Zeichenebene der Figur 1 erstrecken.

An vorausgewählten Stellen, beispielsweise an Kreuzungen von Streben 22 des gitterartig strukturierten Trägerteils 18 sind in der in Figur 1a dargestellten Fügevorbereitungsstellung zum Metalldrahtgeflecht 20 hin weisende Schmelzdome 24 ausgebildet, welche beim anschließenden Fügen des Metalldrahtgeflechts 20 und des Trägerteils 18 miteinander aufgeschmolzen und verformt werden.

Der Heizspiegel 12 ist längs des Doppelpfeils 26 zur Gasdüsenanordnung 14 hin und von dieser weg bewegbar. Er ist überdies durch ein in Figur 1 nicht dargestelltes Kraftgerät, etwa eine Kolben-Zylinder-Anordnung oder ein Gewindespindeltrieb in Richtung zur Gasdüsenanordnung 14 hin mit Kraft beaufschlagbar.

In Figur 1b ist die Heizfläche 12 des Heizspiegels 12 flächig in Kontakt mit der vom Trägerteil 18 weg weisenden Seite des Metalldrahtgeflechts 20 gebracht, wodurch der Heizspiegel 12 Wärme auf das Metalldrahtgeflecht 20 überträgt und dieses damit auf eine Temperatur erwärmt, welche oberhalb der Schmelztemperatur des thermoplastischen Kunststoffs des Trägerteils 18 ist. Selbstverständlich liegt diese Temperatur niedriger als die Schmelztemperatur des Metalldrahtgeflechts 20.

Gleichzeitig oder überlappend mit dem Erwärmungsvorgang drückt der Heizspiegel 12 das Metalldrahtgeflecht 20 an das in einer nicht dargestellten Vorrichtung gehaltertes Trägerteil 18 an, wobei sich aufgrund des Temperaturniveaus des Metalldrahtgeflechts 20 die Schmelzdome 24 unter der Einwirkung der vom Heizspiegel 12 auf das Metalldrahtgeflecht 20 und damit mittelbar auch auf das Trägerteil 18 ausgeübten Fügekraft F verformen. Außerdem werden die Schmelzdome 24 in erwünschter Weise aufgeschmolzen, wodurch das Material der Schmelzdome 24 das Metalldrahtgeflecht 20 lokal durchsetzt und umfließt, so dass zumindest lokal ein Formschluss zwischen dem Trägerteil 18 und dem Metalldrahtgeflecht 20 erzeugt wird.

In Figur 1c befinden sich der Heizspiegel 12, das Trägerteil 18 und das Metalldrahtgeflecht 20 in der gleichen Stellung wie in Figur 1b, jedoch wird nun durch die Gasdüsenanordnung 14 in Richtung der Pfeile 28 ein Gas zum Heizspiegel 12 ausgestoßen, welches das Trägerteil 18 und das Metalldrahtgeflecht 20 durchströmt und dabei kühlt und welches den immer noch mit dem Metalldrahtgeflecht 20 in Berührkontakt stehenden Heizspiegel 12 zumindest an seiner das Metalldrahtgeflecht 20 berührenden Oberfläche anströmt und dadurch ebenfalls kühlt.

Dadurch wird verhindert, dass thermoplastisches Kunststoffmaterial von den verformten Schmelzdomen 24, welches den Heizspiegel 12 unter Umständen benetzt, überhitzt und möglicherweise verkohlt und dadurch den Heizspiegel 12 an der zum Metalldrahtgeflecht 20 weisenden Seite mit der Heizfläche 12a verschmutzt.

Das Gas, welches gemäß der vorliegenden Anmeldung zur konvektiven Kühlung von Trägerteil und Anbauteil sowie gegebenenfalls der Heizeinrichtung verwendet wird, kann für besonders kostengünstige Fälle Luft, insbesondere Druckluft sein. Es kann jedoch, je nach Bedarf, auch irgendein anderes Gas gewählt werden, beispielsweise quasi inerter Stickstoff.

Dadurch, dass das Trägerteil 18 und das Anbauteil konvektiv durch einen Gasstrom gekühlt werden, während die Heizeinrichtung, hier in Form eines Heizspiegels 12, in Berührkontakt mit dem Metalldrahtgeflecht steht, kann das aus dem Trägerteil 18 und dem Anbauteil entstehende Verbundbauteil mit hoher geometrischer Präzision reproduzierbar hergestellt werden.

In Figur 1b ist der Heizspiegel 12 von dem nun aus dem Trägerteil 18 und dem Metalldrahtgeflecht 20 erzeugten Verbundbauteil 30 abgehoben.

Das Verbundbauteil 30 kann aus der Vorrichtung 10 entnommen werden, so dass nach Einlegen eines neuen unverformten Trägerteils 18 sowie eines neuen Metalldrahtgeflechts 20 das eben beschriebene Verfahren erneut ablaufen kann.

## Patentansprüche

1. Verfahren zur Herstellung eines Verbundbauteils (30) mit einem in wenigstens einer Richtung gasdurchlässigen Trägerteil (18), das zumindest abschnittsweise aus einem bei einer Trägerteil-Grenztemperatur schmelzbaren oder zumindest thermisch erweichbaren Werkstoff gebildet ist, und einem mit dem Trägerteil (18) verbundenen, in wenigstens einer Richtung gasdurchlässigen Anbauteil (20) aus einem Werkstoff, welcher bei einer höheren Temperatur als der Trägerteil-Grenztemperatur schmelzbar oder zumindest thermisch erweichbar ist, wobei das Verfahren folgende Verfahrensschritte umfasst:
- Erwärmen des Anbauteils (20) durch eine Wärmequelle (12) mit einer Heizfläche (12a),
- Andrücken von Anbauteil (20) und Trägerteil (18) aneinander,
- konvektives Kühlen von Anbauteil (20) und Trägerteil (18) durch eine das Anbauteil (20) und das Trägerteil (18) wenigstens teilweise durchströmende Gasströmung (bei 28),
**dadurch gekennzeichnet, dass** das Anbauteil (20) auf eine Temperatur über die Trägerteil-Grenztemperatur erwärmt wird, und dass die Gasströmung (bei 28) von wenigstens einer Gasdüse (16) erzeugt wird, die mit Abstand von der Heizfläche (12a) derart angeordnet ist, dass die Strömungsrichtung (28) der Gasströmung (bei 28) eine Strömungskomponente zu der Heizfläche (12a) hin aufweist.

2. Verfahren nach Anspruch 1,
**dadurch gekennzeichnet, dass** eine Wärmezufuhr in das Anbauteil (20) von einer Seite des Anbauteils (20) ausgehend erfolgt, welche nach Fertigstellung des Verbundbauteils (30) vom Trägerteil (18) weg weist.

3. Verfahren nach Anspruch 1 oder 2,
**dadurch gekennzeichnet, dass** das Trägerteil (18) zur Durchführung des konvektiven Kühlens durch die Gasströmung (bei 28) von einer Seite angeströmt wird, welche nach Fertigstellung des Verbundbauteils (30) vom Anbauteil (20) weg weist.

4. Verfahren nach einem der vorhergehenden Ansprüche,
**dadurch gekennzeichnet, dass** die Gasströmung (bei 28) eine Wärmequelle (12) zur Erwärmung des Anbauteils (20) erreicht.

5. Verfahren nach einem der vorhergehenden Ansprüche,
**dadurch gekennzeichnet, dass** während des Andrückens von Anbauteil (20) und Trägerteil (18) aneinander ein Umfließen von Abschnitten des Anbauteils (20) durch Werkstoff des Trägerteils (18) erfolgt.

6. Verfahren nach einem der vorhergehenden Ansprüche,
**dadurch gekennzeichnet, dass** das Erwärmen des Anbauteils (20) zumindest auch konduktiv durch Wärmeübergang von einer Heizeinrichtung (12) auf das Anbauteil (20) erfolgt, wobei die Heizeinrichtung (12) zumindest einen Teil, vorzugsweise einen überwiegenden Teil des Anpressdrucks (F), besonders bevorzugt den gesamten Anpressdruck (F) für das Andrücken von Anbauteil (20) und Trägerteil (18) aneinander erzeugt.

7. Vorrichtung zur Herstellung eines Verbundbauteils (30) mit einem in wenigstens einer Richtung gasdurchlässigen Trägerteil (18), das zumindest abschnittsweise aus einem bei einer Trägerteil-Grenztemperatur schmelzbarem oder zumindest thermisch erweichbarem Werkstoff gebildet ist, und einem in wenigstens einer Richtung gasdurchlässigen Anbauteil (20) aus einem Werkstoff, welcher bei einer höheren Temperatur als der Trägerteil-Grenztemperatur schmelzbar oder zumindest thermisch erweichbar ist, zur Durchführung des Verfahrens gemäß einem der vorhergehenden Ansprüche, wobei die Vorrichtung umfasst:
- eine Heizeinrichtung (12) mit einer Heizfläche (12a), welche zum Kontakt mit dem Anbauteil (20) ausgebildet ist,
**dadurch gekennzeichnet, dass** die Vorrichtung weiter umfasst:
- wenigstens eine Gasdüse (16), welche mit Abstand von der Heizfläche (12a) derart angeordnet ist, dass die Strömungsrichtung (28) einer aus ihr austretenden Gasströmung (bei 28) eine Strömungskomponente zu der Heizfläche (12a) hin aufweist.

8. Vorrichtung nach Anspruch 7,
**dadurch gekennzeichnet, dass** die Heizeinrichtung (12) zur Gasdüse (16) hin und von dieser weg beweglich (bei 26) angeordnet ist.

9. Vorrichtung nach Anspruch 8,
**dadurch gekennzeichnet, dass** sie ein Kraftgerät (bei F) umfasst, welches mit der Heizeinrichtung (12) derart gekoppelt oder koppelbar ist, dass zumindest ein Abschnitt der Heizeinrichtung (12) mit einer zu der Gasdüse (16) hin wirkenden Kraft (F) beaufschlagbar ist.

10. Vorrichtung nach einem der Ansprüche 7 bis 9,
**dadurch gekennzeichnet, dass** das Anbauteil (20) ein Metallgitter, insbesondere ein Metallgeflecht, oder/und ein Metallfasergewirr umfasst.

11. Vorrichtung nach einem der Ansprüche 7 bis 10,
**dadurch gekennzeichnet, dass** das Trägerteil (18) zumindest abschnittsweise aus thermoplastischem Kunststoff gebildet ist.

12. Vorrichtung nach Anspruch 11,
**dadurch gekennzeichnet, dass** an dem Trägerteil (18) in dessen Ausgangszustand wenigstens ein Materialvorsprung (24) vorgesehen ist, welcher zur Verformung während des Fügens von Anbauteil (20) und Trägerteil (18) ausgebildet ist.

## Claims

1. A method for producing a composite component (30) with a support part (18) which is gas-permeable in at least one direction and which is formed at least in sections from a material which is fusible at a support part limiting temperature or can at least be thermally softened, and with an attachment part (20) which is connected to the support part (18) and is gas-permeable in at least one direction and which consists of a material which is fusible at a higher temperature than the support part limiting temperature or can at least be thermally softened, wherein the method comprises the following method steps:
- heating the attachment part (20) by means of a heat source (12) with a heating surface (12a),
- pressing the attachment part (20) and the support part (18) against one another,
- convective cooling of the attachment part (20) and the support part (18) by a gas flow (at 28) at least partly flowing through the attachment part (20) and the support part (18),
**characterised in that** the attachment part (20) is heated to a temperature above the support part limiting temperature, and **in that** the gas flow (at 28) is created by at least one gas nozzle (16) which is arranged at a distance from the heating surface (12a) so that the flow direction (28) of the gas flow (at 28) has a flow component towards the heating surface (12a).

2. A method according to Claim 1,
**characterised in that** a heat supply into the attachment part (20) is effected starting from one side of the attachment part (20), which points away from the support part (18) after completion of the composite component (30).

3. A method according to Claim 1 or 2,
**characterised in that**, to carry out the convective cooling, the gas flow (at 28) flows on to one side of the support part (18), which points away from the attachment part (20) after completion of the composite component (30).

4. A method according to any one of the preceding Claims,
**characterised in that** the gas flow (at 28) reaches a heat source (12) for heating the attachment part (20).

5. A method according to any one of the preceding Claims,
**characterised in that**, while the attachment part (20) and the support part (18) are being pressed against one another, material of the support part (18) flows around portions of the attachment part (20).

6. A method according to any one of the preceding Claims,
**characterised in that** the heating of the attachment part (20) is effected at least also conductively by heat transfer from a heating device (12) to the attachment part (20), wherein the heating device (12) generates at least one part, preferably a preponderant part of the pressing force (F), especially preferably the entire pressing force (F) for pressing the attachment part (20) and the support part (18) against one another.

7. An apparatus for producing a composite component (30) with a support part (18) which is gas-permeable in at least one direction and which is formed at least in sections from a material which is fusible at a support part limiting temperature or can at least be thermally softened, and with an attachment part (20) which is gas-permeable in at least one direction and which consists of a material which is fusible at a higher temperature than the support part limiting temperature or can at least be thermally softened, for carrying out the method according to any one of the preceding Claims, wherein the apparatus comprises:
- a heating device (12) with a heating surface (12a) which is designed for contact with the attachment part (20).
**characterised in that** the apparatus further comprises:
- at least one gas nozzle (16) which is arranged at a distance from the heating surface (12a) so that the flow direction (28) of the gas flow (at 28) emerging therefrom has a flow component towards the heating surface (12a).

8. An apparatus according to Claim 7,
**characterised in that** the heating device (12) is arranged so as to be able to move (at 26) towards and away from the gas nozzle (16).

9. An apparatus according to Claim 8,
**characterised in that** it comprises a power device (at F) which is coupled or can be coupled to the heating device (12) so that at least one portion of the heating device (12) can be acted upon with a force (F) acting towards the gas nozzle (16).

10. An apparatus according to any one of Claims 7 to 9,
**characterised in that** the attachment part (20) comprises a metal lattice, in particular a metal mesh and/or tangled metal fibre.

11. An apparatus according to any one of Claims 7 to 10,
**characterised in that** the support part (18) is formed at least in sections from thermoplastic synthetic material.

12. An apparatus according to Claim 11,
**characterised in that**, in its initial condition, at least one material projection (24) is provided on the support part (18), which projection is designed to be deformed during the joining of the attachment part (20) and the support part (18).

## Revendications

1. Procédé pour la fabrication d'un composant composite (30) avec un élément de support (18) perméable au gaz dans au moins un sens, lequel élément est formé au moins par endroits à partir d'un matériau pouvant fondre ou au moins se ramollir par traitement thermique à une température limite d'élément de support, et avec une pièce rapportée (20) en liaison avec l'élément de support (18), perméable au gaz dans au moins un sens, en un matériau pouvant fondre ou au moins se ramollir par traitement thermique à une température plus élevée que la température limite d'élément de support, le procédé comprenant les étapes suivantes :
- chauffage de la pièce rapportée (20) grâce à une source de chaleur (12) avec une surface de chauffage (12a),
- pression de la pièce rapportée (20) et de l'élément de support (18) l'un contre l'autre,
- refroidissement par convection de la pièce rapportée (20) et de l'élément de support (18) grâce à un flux de gaz (en 28) circulant au moins en partie à travers la pièce rapportée (20) et l'élément de support (18),
**caractérisé en ce que** la pièce rapportée (20) est chauffée à une température supérieure à la température limite d'élément de support, et **en ce que** le flux de gaz (en 28) est généré par au moins une buse à gaz (16), laquelle est disposée à distance de la surface de chauffage (12a) de manière à ce que le sens d'écoulement (28) du flux de gaz (en 28) présente une composante d'écoulement vers la surface de chauffage (12a).

2. Procédé selon la revendication 1, **caractérisé en ce qu'**une amenée de chaleur dans la pièce rapportée (20) s'effectue en partant d'un côté de la pièce rapportée (20), lequel côté tourne le dos à l'élément de support (18) à l'achèvement du composant composite (30).

3. Procédé selon la revendication 1 ou 2, **caractérisé en ce que** pour la réalisation du refroidissement par convection, l'élément de support (18) est soumis à l'écoulement par le flux de gaz (en 28) depuis un côté, lequel côté tourne le dos à la pièce rapportée (20) à l'achèvement du composant composite (30).

4. Procédé selon l'une des revendications précédentes, **caractérisé en ce que** le flux de gaz (en 28) atteint une source de chaleur (12) pour chauffer la pièce rapportée (20).

5. Procédé selon l'une des revendications précédentes, **caractérisé en ce que** pendant la pression de la pièce rapportée (20) et de l'élément de support (18) l'un contre l'autre, il s'en suit que du matériau de l'élément de support (18) coule autour de parties de la pièce rapportée (20).

6. Procédé selon l'une des revendications précédentes, **caractérisé en ce que** le chauffage de la pièce rapportée (20) s'effectue également au moins par conduction grâce à un transfert de chaleur d'une installation de chauffage (12) vers la pièce rapportée (20), l'installation de chauffage (12) générant au moins une partie, de manière préférée une partie essentielle de la force de pression (F), de manière particulièrement préférée l'ensemble de la force de pression (F) pour la pression de la pièce rapportée (20) et de l'élément de support (18) l'un contre l'autre.

7. Dispositif pour la fabrication d'un composant composite (30) avec un élément de support (18) perméable au gaz dans au moins un sens, lequel élément est formé au moins par endroits à partir d'un matériau pouvant fondre ou au moins se ramollir par traitement thermique à une température limite d'élément de support, et avec une pièce rapportée (20) perméable au gaz dans au moins un sens en un matériau pouvant fondre ou au moins se ramollir par traitement thermique à une température plus élevée que la température limite d'élément de support pour la réalisation du procédé selon l'une des revendications précédentes, le dispositif comprenant :
- une installation de chauffage (12) avec une surface de chauffage (12a), laquelle est conçue pour un contact avec la pièce rapportée (20),
**caractérisé en ce que** le dispositif comprend par ailleurs :
- au moins une buse à gaz (16), laquelle est disposée à distance de la surface de chauffage (12a) de manière à ce que le sens d'écoulement (28) du flux de gaz (en 28) sortant de celle-ci présente une composante d'écoulement vers la surface de chauffage (12a).

8. Dispositif selon la revendication 7, **caractérisé en ce que** l'installation de chauffage (12) est disposée de manière mobile (en 26) vers la buse à gaz (16) et en éloignement de celle-ci.

9. Dispositif selon la revendication 8, **caractérisé en ce qu'**il comprend un appareil de force (en F), lequel est couplé ou peut être couplé avec l'installation de chauffage (12) de manière à ce que au moins une partie de l'installation de chauffage (12) peut être alimentée par une force (F) agissant vers la buse à gaz (16).

10. Dispositif selon l'une des revendications 7 à 9, **caractérisé en ce que** la pièce rapportée (20) comprend une grille métallique, en particulier un treillis métallique et/ou un enchevêtrement de fibres métalliques.

11. Dispositif selon l'une des revendications 7 à 10, **caractérisé en ce que** l'élément de support (18) est réalisé au moins par endroits en une matière synthétique thermoplastique.

12. Dispositif selon la revendication 11, **caractérisé en ce que** l'on prévoit sur l'élément de support (18) au moins une avancée de matériau (24) à l'état de départ de celui-ci, laquelle avancée est réalisée pour la déformation pendant l'aboutement de la pièce rapportée (20) et de l'élément de support (18).
